# EUROPEAN PATENT SPECIFICATION

(11) **EP 0 497 700 B1**
(45) Date of publication and mention of the grant of the patent: **20.03.1996**
(21) Application number: 92400243.9
(22) Date of filing: 30.01.1992
(51) Int. Cl.: B29C 45/06

(54) **Rotary molding machine**
Drehende Formmaschine
Machine de moulage rotative

(30) Priority: 31.01.1991 JP 32354/91
(43) Date of publication of application: 05.08.1992
(73) Proprietor: NISSEI ASB MACHINE CO., LTD., Nagano-ken (JP)
(72) Inventor: Kosuge, Satoru, c/o Nissei ASB Machine Co., Ltd., Komoro-shi, Nagano-ken (JP)
(74) Representative: Martin, Jean-Jacques

(56) References cited:
- EP-A- 0 206 914
- EP-A- 0 228 324
- EP-A- 0 288 581
- EP-A- 0 328 658
- FR-A- 2 501 572
- US-A- 4 321 029

## Description

The present invention relates to a rotary molding machine for opening/closing molds by raising/lowering a lip mold.

The rotary injection blow molding machine disclosed in the official gazette of Japanese Patent Laid-open No.63-116830 (corresponding with EP-A-288 581) has an intermittently-rotatable transfer plate under the base secured at the top of the machine platform and a vertically-movable lip mold under the transfer plate.

The lip mold is normally pressed against the bottom surface of the transfer plate by a spring member. Closing with the injection mold is executed by lowering the core mold located at the upside to press the lip mold and further lowering it together with the lip mold until it contacts the injection mold.

For the rotary molding machine, there is no problem when a preform molded by the machine is short and the lip mold has a small vertical stroke. However, when the vertical stroke increases, horizontal displacement easily occurs and any means is necessary for alignment of the lip and injection molds because closing is executed against the spring pressure.

A guiding member for closing consists of a rod having the length corresponding to the vertical stroke. However, installation of the guiding member is restricted because a base and core-mold elevator are mounted on the transfer plate and the guiding member must be set for each lip mold. Therefore, the structure is complex and the machine cost increases compared with the rotary molding machine for opening/closing molds by raising/lowering the injection mold side.

An object of the present invention is to provide a rotary molding machine capable of securely positioning the lip and injection molds independently of the length of the vertical stroke and having a new constitution requiring no guiding member for each lip mold.

The present invention having the above object is characterized in that it comprises a rotary molding machine comprising;
a base secured at the top of a machine platform;
a doughnut-like transfer plate formed by assembling the required number of sectorial plates under said base so that each of the sectorial plates can vertically move;
an annular gear being between said transfer plate and said base, to which each of said sectorial plate are removably connected by connectors;
a driving arrangement on the base for intermittently rotating the annular gear with the transfer plate through a gear;
a lip mold mounted under each of said sectorial plates;
an injection mold mounted on the machine platform at a stop position of the lip mold;
movable tie bars for clamping set at three positions on the circumference of the injection mold by passing the tie bars through the base from the machine platform;
a clamping board secured at the top of the tie bars; and
a core mold mounted under the clamping board;
wherein cylinders for opening/closing the molds are set under said plate of each of said movable tie bars so that they can vertically move by securing a piston ring to said tie bars and catching members for raising/lowering the plates are mounted at the top of the cylinders.

For the above constitution, the lip mold is transferred to the upside of the injection mold together with the sectorial plates and, when it is located on the catching members, the transfer plate stops and the sectorial plates are caught by the catching members.

When the clamping board is lowered for clamping together with the movable tie bars by applying a fluid pressure to the upside of the cylinders after the transfer plate stops, the piston ring side lowers together with the movable tie bars and the cylinders keep the position together with the catching members.

Thus, the lip and core molds are closed and the core mold is pressed by the lip mold. When the fluid pressure applied to the cylinders is changed from the upper side to the lower side, the cylinders lower together with the tie bars, the sectorial plates supported by the catching members lower up to a position where they contact the top surface of the injection mold, and the lip and injection molds are closed.

When the movable tie bars and the clamping board are moved upward after injection molding is executed, the movable tie bars rise while the cylinders stop, then the cylinders rise together with the movable tie bars to open the molds, and the sectorial plates return to the original position together with the catching members.

Fig. 1 is a flat view of the rotary molding machine according to the present invention;
Fig. 2 is a front view of an injection molding section;
Fig. 3 is a front view of the injection molding section when lip and core molds close;
Fig. 4 is a front view of the injection molding section when lip and injection molds close;
Fig. 5 is a partially sectional view of a movable mold and cylinder ; and

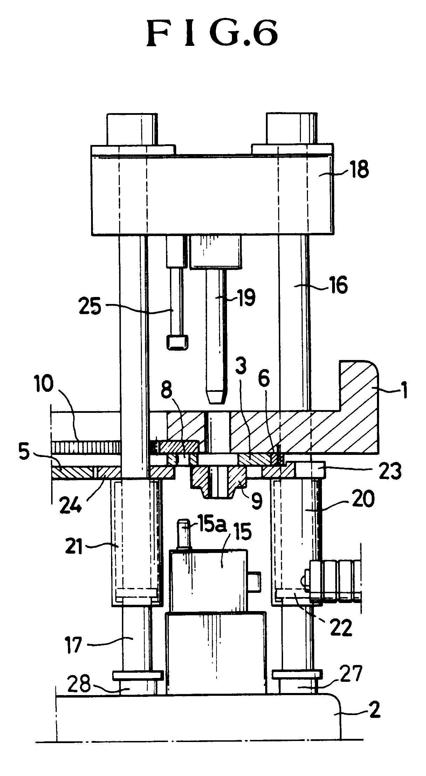

Fig. 6 is a sectional view at center line of Fig. 3 when molds are opened.

### Explanation of numerals

- 1:: Base
- 2:: Machine platform
- 3:: Plate
- 4:: Transfer plate
- 9:: Lip mold
- 10:: Annular gear
- 11:: Connector
- 12:: Driving arrangement
- 14:: Clamping arrangement
- 15:: Injection mold
- 16:: External movable tie bar
- 17:: Internal movable tie bar
- 18:: Clamping board
- 19:: Core mold
- 20:: External cylinder for opening/closing molds
- 21:: Internal cylinder for opening/closing molds
- 22:: Piston ring
- 23:: External catching member
- 24:: Internal catching member
In the figure, numeral 1 is a base secured to the upper side of a machine platform 2, which has a circular transfer plate 4 formed like a doughnut by assembling four sectorial plates 3, 3 under the base so that each of them can vertically move. The transfer plate 4 is rotatably supported at the base side by the members 5, 6 arranged at the inside and the outer periphery of the plate.

Each of the plates 3, 3 has a slot 7 and a positioning hole 8 on its surface and a split lip mold 9 is set under the plate at the slot 7. A fitting through hole 3a for connectors 11, 11 connecting with an annular gear 10 rotatably mounted between the base 1 and the transfer plate 4 to the plate surfaces at the both sides of the positioning hole 8.

The annular gear has teeth inside and the teeth are engaged with the gear 13 of a driving arrangement 12 mounted on the base to intermittently rotate the annular gear 9 together with the plates 3, 3 every 90 degree.

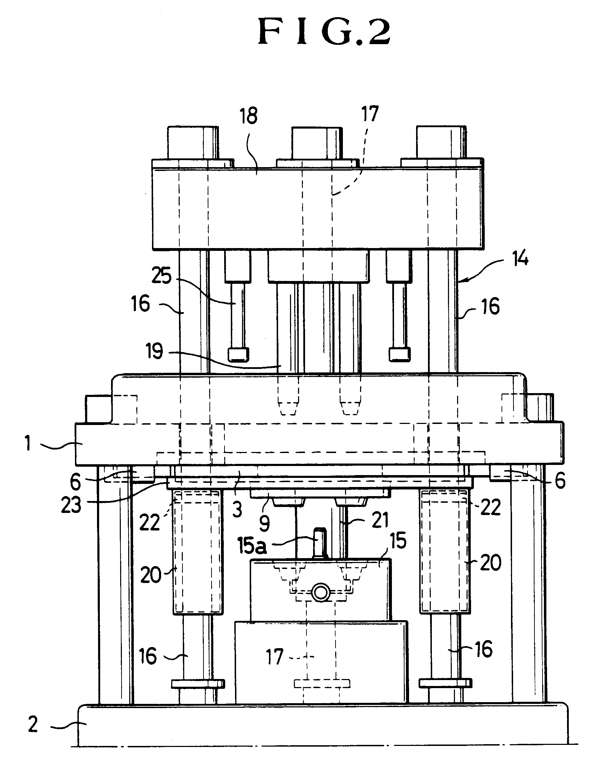

Numeral 14 is a clamping arrangement (see Fig. 2 forward) which comprises an injection mold 15 mounted on the machine platform at a stop position of the lip mold, external movable tie bars 16, 16 and an internal movable tie bar 17 which are set at three positions on the circumference of the injection mold 15 by passing them through the base 1 from the machine platform 2 so that they can vertically move, a clamping board 18 secured to the upside of the movable tie bars 16, 17, and a core mold 19 mounted under the clamping board 18.

Pneumatic or hydraulic cylinders 20, 21 for opening/closing molds are set to the surface under the plates of movable tie bars 16, 17 by securing a piston ring 22 to the ring member 26 at the side of the movable tie bar so that the cylinders can vertically slide and catching members 23, 24 for raising/lowering the plates are provided at the top of the cylinders 20, 21.

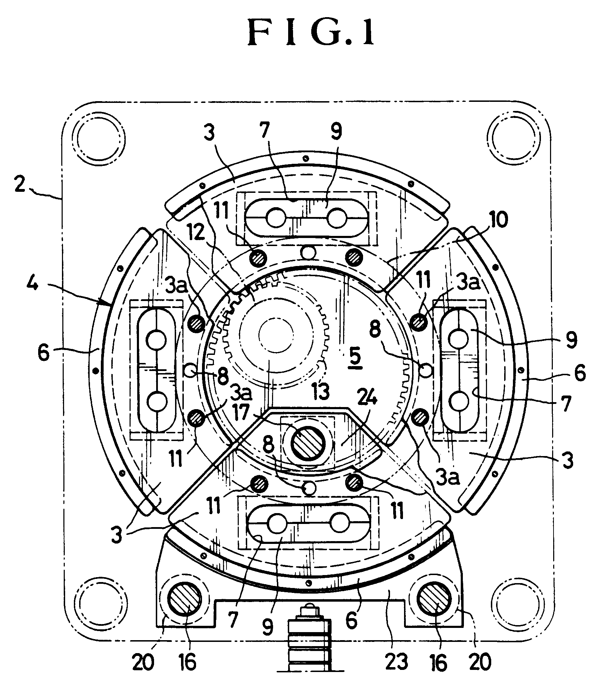

The catching members 23 consists of a plate mounted on a pair of cylinders 20, 20 and a part of an external supporting member 6 is mounted on the upper surface of the plate. The catching member 24, as shown in Fig. 1, consists of a sectorial plate forming a part of an internal supporting member 5, which catches a plate 3 together with the catching member 23 and vertically moves together with the cylinders 20, 21.

In Fig. 2, numeral 25 is a pressing member for the plate 3, which is mounted downward on the clamping board 18 together with a core mold 19. When the plate 3 can smoothly be pressed down by the core mold 19, the pressing member 25 can be omitted.

Further the bottom of the movable tie bars 16, 17 is connected to the piston of hydraulic cylinders 27, 28. Though the detailed description of the bottom structure of the movable tie bars 16, 17 is omitted, the structure is the same as one disclosed in the official gazette of Japanese Patent Laid-open No.63-116830 and vertical movement is made by hydraulic pressure.

The following is the description of the operation for opening/closing the lip mold 9 and injection mold 15.

For this rotary molding machine, when the annular gear 10 is rotated by 90 degree together with the transfer plate 4 by the driving arrangement 12 and then stops, one plate 3 is always located on the catching members 23, 24 as shown in Fig. 1. At this stop position, the plate 3 is caught by the catching members 23, 24 and the lip mold 9 remains above the injection mold 15.

When a fluid pressure is applied to the upside of the cylinders 20, 21 and the clamping board 18 is lowered together with the movable tie bars 16, 17 in order to execute clamping, the piston ring side lowers together with the movable tie bars but the cylinders 20, 21 keep the position together with the catching members 23, 24.

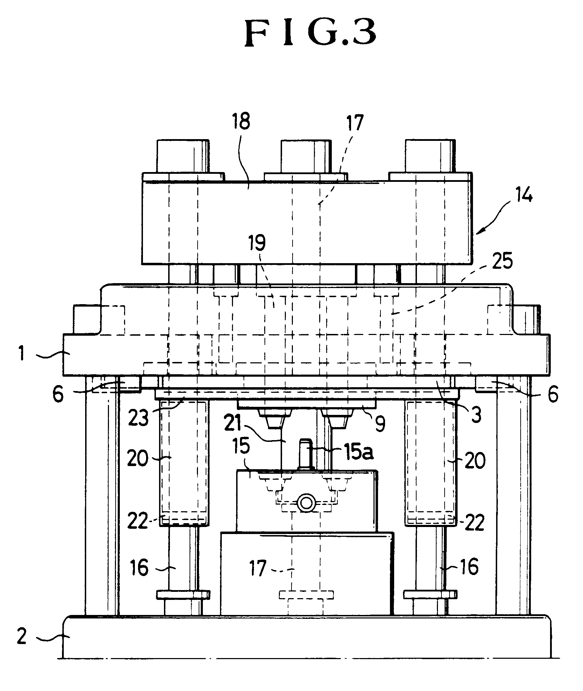

Thus, as shown in Fig. 3, the lip mold 9 and core mold 19 close and the core mold 19 and pressing member 25 press the lip mold 9 and plate 3. When the fluid pressure applied to the cylinders 20, 21 is changed from the upper side to the lower side while the lip mold 9 and plate 3 are pressed, the cylinders 20, 21 lower together with the movable tie bars 16, 17 and the catching members 23, 24 also lower while supporting the plate 3.

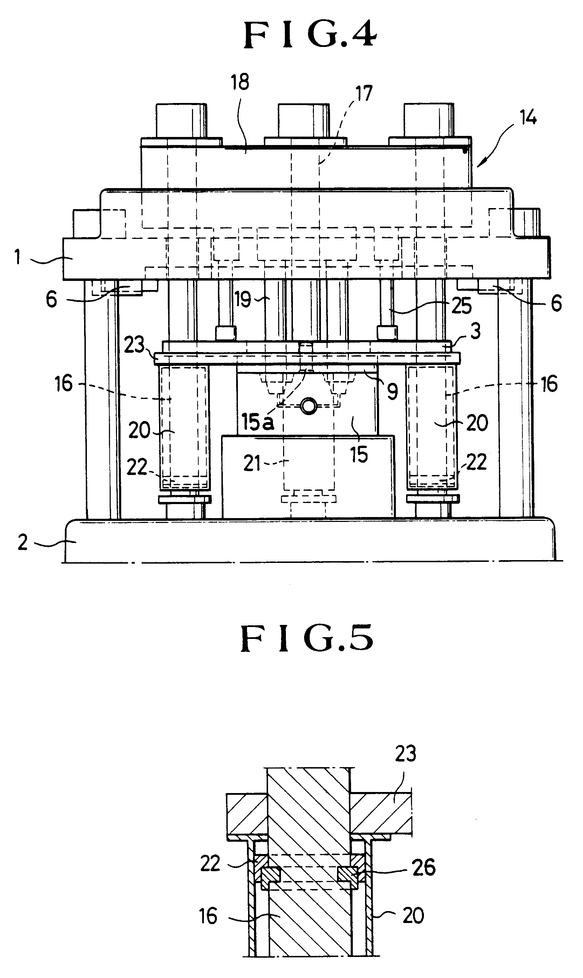

While they lower, the connector 11 is removed from the plate surface and separates from the annular gear 10. Then, the lip mold 9 and injection mold 15 close as shown in Fig. 4. While the molds close, the positioning pin 15a at the top of the injection mold is fitted to the positioning hole 8.

When the movable tie bars 16, 17 and the clamping board 18 are moved upward after injection molding, the movable tie bars 16, 17 rises though the cylinders 20, 21 remains before the cylinders 20, 21 rise together with the movable tie bars to open the molds, the plate 3 returns to the original position together with the catching members 23, 24, and the connector 11 is fitted to the plate surface again to start movement by the annular gear 10.

As described above, the present invention requires no mold opening/closing member or guiding member for each lip mold because it comprises
a base secured at the top of a machine platform;
a doughnut-like transfer plate formed by assembling the required number of sectorial plates under said base so that each of the sectorial plates can vertically move;
an annular gear being between said transfer plate and said base, to which each of said sectorial plate are removably connected by connectors;
a driving arrangement on the base for intermittently rotating the annular gear with the transfer plate through a gear;
a lip mold mounted under each of said sectorial plates;
an injection mold mounted on the machine platform at a stop position of the lip mold;
movable tie bars for clamping set at three positions on the circumference of the injection mold by passing the tie bars through the base from the machine platform;
a clamping board secured at the top of the tie bars; and
a core mold mounted under the clamping board;
wherein cylinders for opening/closing the molds are set under said plate of each of said movable tie bars so that they can vertically move by securing a piston ring to said tie bars and catching members for raising/lowering the plates are mounted at the top of the cylinders.

Moreover, because molds can be opened or closed by vertically moving the movable tie bars and the cylinders fitted around the tie bars, the lip mold can be moved vertically to the injection mold independently of the length of the opening/closing stroke and positioning for opening/closing the molds is easily executed even if the transfer plate consists of a plurality of plates. Therefore, it is possible to form a bottle requiring a long preform.

Further more, because the guiding member does not protrude from the transfer plate unlike the conventional type, it is unnecessary to form a space for moving the guiding member on the base and reinforce the base and the base structure is further simplified. Therefore, there are advantages that manufacturing is simplified and the manufacturing cost decreases.

## Claims

1. A rotary molding machine comprising;
a base (1) secured at the top of a machine platform (2);
a doughnut-like transfer plate (4) formed by assembling the required number of sectorial plates (3) under said base so that each of the sectorial plates can vertically move;
an annular gear (10) being between said transfer plate (4) and said base, to which each of said sectorial plate are removably connected by connectors (11);
a driving arrangement (12) on the base for intermittently rotating the annular gear with the transfer plate through a gear;
a lip mold (9) mounted under each of said sectorial plates (3);
an injection mold (15) mounted on the machine platform at a stop position of the lip mold;
movable tie bars (16, 17) for clamping set at three positions on the circumference of the injection mold by passing the tie bars through the base from the machine platform;
a clamping board (18) secured at the top of the tie bars; and
a core mold (19) mounted under the clamping board;
wherein cylinders (20, 21) for opening/closing the molds are set under said plate of each of said movable tie bars so that they can vertically move by securing a piston ring (22) to said tie bars and catching members (23, 24) for raising/lowering the plates are mounted at the top of the cylinders.

2. A rotary molding machine claimed in claim 1, wherein said catching members for raising/lowering the plate (3) consist a plate provided at a top of a pair of external cylinder (20) and a plate provided at a top of a pair of internal cylinder (21), and the plate member above said inner cylinder is sectorial and forming a part of an internal supporting member.

3. A rotary molding machine claimed in claim 1, wherein said clamping board (18) comprises a pressing member for the plate, which is mounted near the core mold (19).

4. A rotary molding machine claimed in claim 1, wherein each plate of the transfer plate has a through hole (3a) for connected with a plurality of the connectors (11) provided under the annular gear (10), and a positioning hole (8) fitting by a positioning pin at the mold at the surface of the plate between them.

## Patentansprüche

1. Drehende Formmaschine mit:
einer an die Spitze einer Maschinenplattform (2) gesicherten Grundplatte (1),
einer ringförmigen Transferplatte (4), welche durch Zusammensetzen einer benötigten Anzahl von Abschnittsplatten (3) unter der Grundplatte gebildet ist, so daß jede der Abschnittsplatten vertikal bewegt werden kann,
einem ringförmigen Zahnrad (10) zwischen der Transferplatte (4) und der Grundplatte, an welche jeder der Abschnittsplatten lösbar durch Verbinder (11) verbunden ist,
einer Antriebsanordnung (12) auf der Grundplatte zur intermittierenden Drehung des ringförmigen Zahnrads mit der Transferplatte durch ein Zahnrad,
einer unter jeder der Abschnittsplatten (3) angebrachten Klappenform (9),
einer auf der Maschinenplattform an einer Stopposition der Klappenform angebrachten Einspritzform (15),
beweglichen Ankerbolzen (16, 17) zum Spannen, welche an drei Positionen am Umfang der Einspritzform durch Hindurchlassen der Ankerbolzen durch die Grundplatte von der Maschinenplattform eingesetzt sind,
einer an der Spitze der Ankerbolzen gesicherten Spannplatte (18) und
einer unter der Spannplatte befestigten Kernform (19),
wobei Zylinder (20, 21) zum Öffnen/Schließen der Formen unter der Platte jeder der beweglichen Ankerbolzen gesetzt sind, so daß sie sich vertikal durch Sicherung eines Kolbenrings (22) an die Ankerbolzen bewegen können und wobei Fangteile (23, 24) zum Anheben/Absenken der Platten an den Spitzen der Zylinder angebracht sind.

2. Drehende Formmaschine nach Anspruch 1, bei welcher die Fangteile zum Anheben/Absenken der Platte (3) aus einer an der Spitze eines Paars äußerer Zylinder (20) angebrachten Platte und aus einer an der Spitze des internen Zylinders (21) angebrachten Platte bestehen, und bei welcher das Plattenteil über dem inneren Zylinder abschnittförmig ist und einen Teil des internen Tragteils bildet.

3. Drehende Formmaschine nach Anspruch 1, bei welcher die Spannplatte (18) ein Druckteil für die Platte, welche in der Nähe der Kernform (19) angebracht ist, umfaßt.

4. Drehende Formmaschine nach Anspruch 1, bei welcher jede Platte der Transferplatte eine Durchgangsbohrung (3a) zur Verbindung mit einer Mehrzahl von unterhalb des ringförmigen Zahnrades (10) angeordneten Verbindern (11) aufweist, und welche ein Positionierloch (8) aufweist, in welches ein Positionierbolzen an der Form an der Oberfläche der Platte zwischen ihnen eingepaßt ist.

## Revendications

1. Machine de moulage rotative, comprenant :
une base (1) fixée à la partie supérieure d'une plateforme (2) de la machine;
une plaque de transfert de forme annulaire (4) formée par assemblage du nombre requis de plaques sectorielles (3) au-dessous de ladite base de telle sorte que chacune des plaques sectorielles peut se déplacer verticalement;
une couronne annulaire dentée (10) disposée entre la plaque de transfert (4) et ladite base et à laquelle lesdites plaques sectorielles sont raccordées de façon amovible par des organes de liaison (11);
un dispositif d'entraînement (12) situé sur la base et pour entraîner en rotation de façon intermittente la couronne dentée annulaire équipée de la plaque de transfert, à l'aide d'un pignon;
un moule à lèvre (9) monté au-dessous de chacune desdites plaques sectorielles (3);
un moule d'injection (15) monté sur la plateforme de la machine dans une position d'arrêt du moule à lèvre;
des tirants mobiles de serrage (16,17), disposés en trois positions sur la circonférence du moule d'injection, au moyen du passage de ces tirants à travers la base à partir de la plateforme de la machine;
un panneau de serrage (18) fixé à la partie supérieure des tirants; et
un moule à noyau (19) monté au-dessous du panneau de serrage; et
dans laquelle des vérins (20,21) servant à ouvrir/fermer les moules sont disposés au-dessous de ladite plaque de chacun desdits tirants mobiles de sorte qu'ils peuvent se déplacer verticalement grâce à la fixation d'un segment de piston (22) auxdits tirants, et des éléments de saisie (23,24) pour soulever/abaisser les plaques sont montés à l'extrémité supérieure des vérins.

2. Machine de moulage rotative selon la revendication 1, dans laquelle lesdits éléments de saisie servant à soulever/abaisser la plaque (3) sont constitués par une plaque prévue à l'extrémité supérieure d'un couple de vérins extérieurs (20), et par une plaque prévue à une extrémité supérieure d'un couple de vérins intérieurs (21), et l'élément en forme de plaque au-dessus dudit vérin intérieur possède une forme sectorielle et fait partie d'un élément de support intérieur.

3. Machine de moulage rotative selon la revendication 1, dans laquelle ledit panneau de serrage (18) comprend un élément de compression pour la plaque, qui est monté à proximité du moule à noyau (19).

4. Machine de moulage rotative selon la revendication 1, dans laquelle chaque plaque de la plaque de transfert possède un trou traversant (3a) destiné à être raccordé à une pluralité des organes de liaison (11) prévus au-dessous de la couronne dentée annulaire (10), et un trou de positionnement (8) dans lequel est insérée une broche de positionnement située sur le moule, à la surface de la plaque, entre ces éléments.
